# EUROPEAN PATENT APPLICATION

(11) **EP 3 751 227 A1**
(43) Date of publication of application: **16.12.2020**
(21) Application number: 19888868.7
(22) Date of filing: 30.05.2019
(51) Int. Cl.: F41J 9/08, B64C 3/10

(54) **STEALTH LARGE MANEUVERING TARGET AIRCRAFT AND CONTROL METHOD FOR STEALTH LARGE MANEUVERING TARGET AIRCRAFT**

(30) Priority: 26.11.2018 CN 201811421441
(71) Applicant: GFA Aviation Technology Beijing Co., Ltd., Beijing 102402 (CN)
(72) Inventor: LI, Zhaohui, Chibi Xianning, Hubei 437300 (CN); CHEN, Tingfei, Putian, Fujian 351200 (CN); WANG, Lei, Jiaozuo, Henan 454350 (CN); SUN, Lijun, Puyang, Henan 457001 (CN)
(74) Representative: Vesterinen, Jussi Tapio
(86) International application number: PCT/CN2019/089301
(87) International publication number: WO 2020/107846

(57) **Abstract**

The present invention provides a stealth high maneuvering target aircraft and a method for controlling a stealth high maneuvering target aircraft, which relates to the technical field of unmanned aerial vehicles and solves the technical problem existing in the prior art that the stealth characteristic of the target aircraft is poor and the stealth design and the comprehensive matching degree between the stealth design and the flight performance of the target aircraft is not high. The stealth high maneuvering target aircraft comprises a fuselage, a wing, a vertical tail, a horizontal tail and a "clam-type" air inlet provided under the ventral of the fuselage. The wing is provided in the middle of the fuselage and belongs to the lower single-wing layout. The vertical and horizontal tails are provided at the tail of the fuselage; a method for controlling the stealth high maneuvering target aircraft confirms a dynamic model with high accuracy and high confidence; uses the combined control of overload and attitude to ensure stable flight control of large overload; and uses overload, speed, angle of attack, and sideslip angle by the control system. The present invention can overcome the problem of poor stealth characteristics of the existing target aircraft, and can solve the problem that the comprehensive matching degree between the stealth design and the flight performance of the target aircraft is not high.

## Description

The present application claims the priority of the Chinese patent application submitted to the State Intellectual Property Office of China on November 26, 2018 and entitled "Stealth High Maneuvering Target Aircraft And Method For Controlling Stealth High Maneuvering Target Aircraft" with the application number 201811421441.3, the entire content of which is incorporated herein by reference.

### TECHNICAL FIELD

The present invention relates to the technical field of unmanned aerial vehicles, in particular to a stealth high maneuvering target aircraft and a method for controlling a stealth high maneuvering target aircraft.

### BACKGROUND

The combat style of information warfare has been transformed into a "non-contact" direction. Therefore, enhancing the stealth performance of unmanned aerial vehicles has become an urgent problem to be solved by the military of various countries. At present, the stealth technology of unmanned aerial vehicles is still in the development stage, but with the continuous emergence of stealth materials suitable for fighters and the continuous improvement of stealth technology, the stealth performance of unmanned aerial vehicles will be strengthened and improved. For combat aircrafts, the most important stealth technology is radar stealth technology. Stealth performance has become an important indicator of the fourth-generation fighter. The US F-22 "Raptor" and the Russian S-37 "Flanker" have high stealth performance. For example, the F-22 radar cross section is 0.01 to 0.1 square meters. The stealth characteristic of F-117 is more prominent, and its radar scattering area is only 0.001 to 0.01 square meters. In the design stage of the US X-series unmanned aerial vehicles, stealth performance has been one of the important goals. In terms of high maneuvers, the United States has produced BQM-series target aircrafts in the 1960s and 1970s, with an overload ranging from 6g to 8g and an output of more than 10,000 target aircrafts, which are widely used in the training of air defense weapon systems such as air defense missiles and surface/ship-to-air missiles and anti-aircraft guns..

Target aircrafts in China have remained at the level of the technical indicators of the second-generation fighters for a long time, and they are basically blank in stealth. The infrared characteristics and radar characteristics also take non-stealth fighters as the simulated objects. Angle reflectors and infrared intensifiers are often installed inside the target aircrafts to enhance their radar scattering and infrared characteristics. In the past two years, the radar scattering area of small RCS target aircrafts developed in China has been on the order of 0.1 square meters. The overload capacity of target aircrafts in China hovers between 4 and 5g. At present, there are relatively few types of target aircrafts in China, and there is a certain gap in performance compared with those in foreign countries. Especially with the continuous progress of aviation weapons, it is difficult for the performance of existing target aircrafts to meet the requirements of scientific research, military training and other indicators.

### SUMMARY

The first object of the embodiments of the present invention is to provide a stealth high maneuvering target aircraft to solve the technical problem existing in the prior art that the stealth characteristic of the target aircraft is poor.

To achieve the above object, the present invention provides the following technical solutions:
a stealth high maneuvering target aircraft provided by the present invention, comprising a fuselage, a wing, a vertical tail, a horizontal tail, and a "clam-type" air inlet provided under the ventral of the fuselage, wherein: the wing is provided in the middle of the fuselage, the wing is located on both sides of the fuselage and is symmetrically provided, and the vertical tail and the horizontal tail are provided at the tail of the fuselage;
the sweep-back angle of the leading edge of the wing ranges from 40° to 50°, the twisting angle of the leading edge ranges from 1° to 5°, the aspect ratio is set to be medium, the wing is provided as a sweep-back lower single wing of a typical asymmetric and curved high-speed airfoil at the same time, and ailerons are provided at the rear edge in the middle of the left and right wings;
the horizontal tail is provided in the form of having an elevator, and has an angle range of the sweep-back angle of the leading edge ranging from 40° to 50°, a medium aspect ratio, and a symmetric airfoil; the vertical tail is provided in the form of having no rudder, and has an angle range of the sweep-back angle of the leading edge ranging from 35° to 45°, a medium aspect ratio, and a symmetric airfoil.

Preferably, the sweep-back angle of the leading edge of the wing is 45°, and the twisting angle of the leading edge of the wing is 2°.

Preferably, the sweep-back angle of the leading edge of the horizontal tail is 45°, and the sweep-back angle of the leading edge of the vertical tail is 40°.

Preferably, the stealth high maneuvering target aircraft further comprises an air outlet, and the "clam-type" air inlet and the air outlet are provided to be integrated.

Preferably, protrusions are provided on the fuselage, and the protrusions are all built into the fuselage.

Preferably, the surfaces of the fuselage are all abutted using a serrated opening and/or seamlessly.

Preferably, the "clam-type" air inlet is made of stealth material.

The stealth high maneuvering target aircraft provided in the embodiments of the present invention has the following technical effects compared with the prior art.

The stealth high maneuvering target aircraft comprises a fuselage, a wing, a vertical tail, a horizontal tail, and a "clam-type" air inlet provided under the ventral of the fuselage. Compared with traditional target aircrafts, the same point is that the target aircrafts use a sweep-back lower single wing, a horizontal tail and vertical tail rear-mounted, a trapezoidal cross-section streamlined fuselage, and an air inlet provided under the ventral. The difference is that the sweep-back angle of the leading edge of the wing, the twisting angle of the leading edge, the aspect ratio, and the sweep-back lower single wing have been set, ailerons are provided at the rear edge in the middle of the left and right wings at the same time, and the air inlet is the "clam-type" air inlet. Compared with traditional target aircrafts, the above high maneuvering target aircraft has fewer shape protrusions, and the wing, the horizontal tail, and the vertical tail use the swept-back angle to reduce scattering, improving stealth characteristics, that is to say, strengthening its own protection ability, and thus improving its combat capability.

The second object of the embodiments of the present invention is to provide a method for controlling the stealth high maneuvering target aircraft to solve the technical problem existing in the prior art that the comprehensive matching degree between the stealth design and the flight performance of the target aircraft is not high.

To achieve the above object, the present invention provides the following technical solutions:

A method for controlling the stealth high maneuvering target aircraft provided by an embodiment of the present invention comprises the steps of:
S1: confirming a dynamic model with high accuracy and high confidence through a system identification method;
S2: using the combined control of overload and attitude to ensure stable flight control of large overload;
S3: using overload, speed, angle of attack, and sideslip angle by the control system to ensure the safety of overload and maneuvering flight.

Preferably, in step S1, the required state points of the flight envelope with high accuracy and high confidence are confirmed through the system discriminating mode at the same time.

Preferably, in step S3, the overload, speed, angle of attack, sideslip angle and height of the stealth high maneuvering target aircraft are simultaneously controlled to ensure the safety of overload and maneuvering flight.

Compared with the prior art, the method for controlling the stealth high maneuvering target aircraft provided in the embodiments of the present invention has the following technical effects.

Compared with the traditional target aircraft control method in China, the method for controlling the stealth high maneuvering target aircraft has the following advantage. The target aircraft in China has a relatively small overload capacity (3∼4g), which is generally difficult to achieve a flight above 4g or has a short duration, which hinders the maneuvering performance of the target aircraft. This small overload capacity is limited by its own control method. Traditional attitude control strategies will be affected by factors such as sensor accuracy and lag, resulting in large control errors, so that it is difficult to achieve flight above 4g. The method for controlling the stealth high maneuvering target aircraft of the present invention confirms a dynamic model with high accuracy and high confidence using a system identification method, uses the combined control of overload and attitude to ensure stable flight control of large overload, and uses overload, speed, angle of attack, and sideslip angle by the control system, so that the stealth target aircraft can achieve overload of 8g, so as to simulate a high-speed high maneuvering target aircraft of the main flight characteristics of the third and fourth generation aircraft. The stealth target aircraft has the stealth characteristics of a small radar scattering area, meeting the needs of testing the combat capability of air combat weapon systems and the combat training of daily troops.

### BRIEF DESCRIPTION OF THE DRAWINGS

In order to more clearly explain the embodiments of the present invention or the technical solutions in the prior art, the drawings required in the embodiments or the description of the prior art will be briefly introduced. Obviously, the drawings in the following description are only a part of the embodiments of the present invention. For those skilled in the art, other drawings can be obtained based on these drawings without paying any creative labor.
FIG. 1 is a schematic diagram of a three-dimensional structure of a stealth high maneuvering target aircraft according to an embodiment of the present invention;
FIG. 2 is a front view of a stealth high maneuvering target aircraft according to an embodiment of the present invention;
FIG. 3 is a side view of a stealth high maneuvering target aircraft according to an embodiment of the present invention.

In the figures: 100, fuselage; 101, wing; 102, vertical tail; 103, horizontal tail; 104, "clam-type" air inlet.

### DESCRIPTION OF THE EMBODIMENTS

To make the objectives, technical solutions, and advantages of the present invention clearer, the technical solutions of the present invention will be described in detail hereinafter. Obviously, the described embodiments are only a part of the embodiments of the present invention, rather than all the embodiments. Based on the embodiments of the present invention, all other embodiments obtained by those skilled in the art without paying any creative labor shall fall within the protection scope of the present invention.

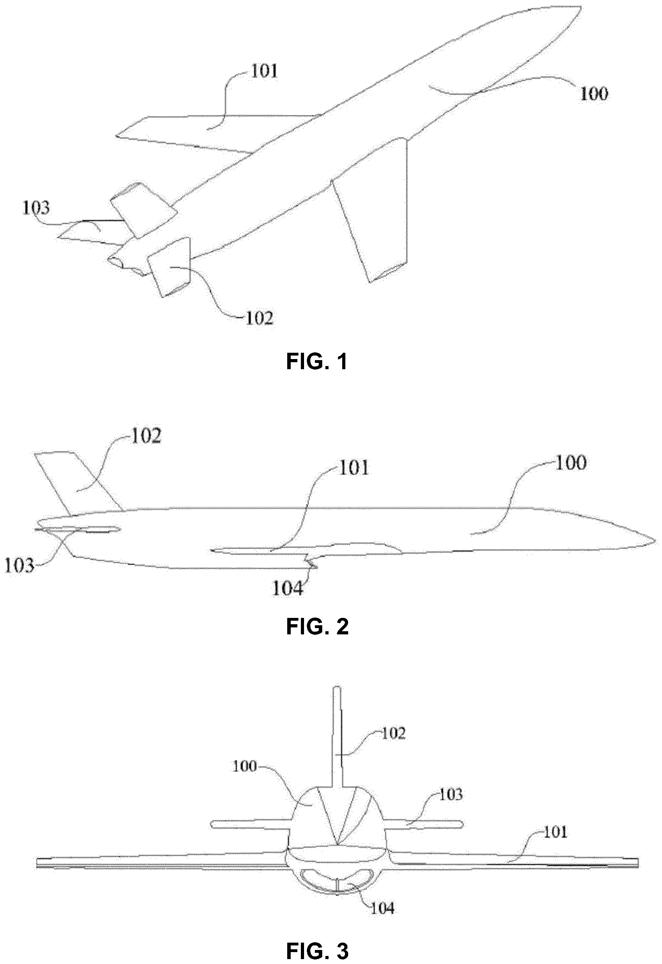

In the description of the present invention, it should be understood that the orientation or positional relationship indicated by the terms "center", "length", "width", "height", "upper", "lower", "front", "back", "left", "right", "vertical", "horizontal", "top", "bottom", "inner", "outer", "side", etc. is based on the orientation or positional relationship shown in FIG.1. It is only for the convenience of describing the present invention and simplifying the description, rather than indicating or implying that the indicated device or element must have a specific orientation or be constructed and operate in a specific orientation, and therefore cannot be construed as limiting the present invention. In the description of the present invention, unless otherwise stated, "a plurality of" means two or more.

### Embodiment 1:

As shown in FIGS. 1 to 3, FIG. 1 is a schematic diagram of a three-dimensional structure of a stealth high maneuvering target aircraft according to an embodiment of the present invention. FIG. 2 is a front view of a stealth high maneuvering target aircraft according to an embodiment of the present invention. FIG. 3 is a side view of a stealth high maneuvering target aircraft according to an embodiment of the present invention. The stealth high maneuvering target aircraft provided by the present invention comprises a fuselage 100, a wing 101, a vertical tail 102, a horizontal tail 103, and a "clam-type" air inlet 104 provided under the ventral of the fuselage 100, wherein the wing 101 is provided in the middle of the fuselage 100, the wing 101 is located on both sides of the fuselage 100 and is symmetrically provided, and the vertical tail 102 and the horizontal tail 103 are provided at the tail of the fuselage 100.

The sweep-back angle of the leading edge of the wing 101 ranges from 40° to 50°, the twisting angle of the leading edge ranges from 1° to 5°, the aspect ratio is set to be medium, the wing 101 is provided as a sweep-back lower single wing of a typical asymmetric and curved high-speed airfoil at the same time, and ailerons are provided at the rear edge in the middle of the left and right wings 101; the horizontal tail 103 is provided in the form of having an elevator, and has an angle range of the sweep-back angle of the leading edge ranging from 40° to 50°, a medium aspect ratio, and a symmetric airfoil; the vertical tail 102 is provided in the form of having no rudder, and has an angle range of the sweep-back angle of the leading edge ranging from 35° to 45°, a medium aspect ratio, and a symmetric airfoil.

Compared with traditional target aircrafts, both the target aircrafts use a sweep-back lower single wing 101, a horizontal tail 103 and vertical tail 102 rear-mounted, a trapezoidal cross-section streamlined fuselage 100, and an air inlet provided under the ventral. The difference is that the sweep-back angle of the leading edge of the wing 101, the twisting angle of the leading edge, the aspect ratio, and the sweep-back lower single wing have been set, ailerons are provided at the rear edge in the middle of the left and right wings 101 at the same time, and the air inlet is the "clam-type" air inlet 104. Compared with traditional target aircrafts, the above high maneuvering target aircraft has fewer shape protrusions, and the wing 101, the horizontal tail 103, and the vertical tail 102 use the swept-back angle to reduce scattering, improving stealth characteristics, that is to say, strengthening its own protection ability, and thus improving its combat capability.

As a preferred solution of this embodiment, specifically, the sweep-back angle of the leading edge of the wing 101 is 45°, and the twisting angle of the leading edge of the wing 101 is 2°.

As a preferred solution of this embodiment, specifically, the sweep-back angle of the leading edge of the horizontal tail 103 is 45°, and the sweep-back angle of the leading edge of the vertical tail 102 is 40°.

As a preferred solution of this embodiment, specifically, the stealth high maneuvering target aircraft further comprises an air outlet, and the "clam-type" air inlet 104 and the air outlet are provided to be integrated. The air outlet and the air outlet are integrally designed. The use of the "clam-type" air inlet 104 optimizes the cooling air flow induction system.

As a preferred solution of this embodiment, protrusions are provided on the fuselage 100, and the protrusions are all built into the fuselage 100. The layout of the protrusions needs to meet the stealth requirements. For example, parachute cords, parachute straps, and joints are all built-in, and parachute strap opening cover uses a cabin automatic opening structure.

As a preferred solution of this embodiment, the surfaces of the fuselage 100 are all abutted using a serrated opening and/or seamlessly. Specifically, the surface of the fuselage 100 is treated. A separation surface, an airspeed tube, a radio measurement and control antenna, a fuel tank/working chamber cover and an air inlet/outlet hole, etc. can be abutted with a serrated opening cover and/or seamlessly to meet stealth requirements.

As a preferred solution of this embodiment, the "clam-type" air inlet 104 is made of stealth material. Specifically, the places that the stealth technology cannot be used, such as the "clam-type" air inlet 104 and the lip, are made of stealth material.

### Embodiment 2:

On the basis of Embodiment 1, this embodiment further provides a method for controlling a stealth high maneuvering target aircraft to solve the problem existing in the prior art that the comprehensive matching degree between the stealth design and the flight performance of the target aircraft is not high.

The method for controlling a stealth high maneuvering target aircraft provided by the present invention comprises the steps of:
S1: confirming a dynamic model with high accuracy and high confidence through a system identification method;
S2: using the combined control of overload and attitude to ensure stable flight control of large overload;
S3: using overload, speed, angle of attack, and sideslip angle by the control system to ensure the safety of overload and maneuvering flight.

The feasibility of the large overload control scheme has been verified by digital simulation, semi-physical simulation and turntable simulation. The method for controlling the stealth high maneuvering target aircraft meets the design requirements.

Compared with the traditional target aircraft control method in China, the method for controlling the stealth high maneuvering target aircraft has the following advantage. The target aircraft in China has a relatively small overload capacity (3∼4g), which is generally difficult to achieve a flight above 4g or has a short duration, which hinders the maneuvering performance of the target aircraft. This small overload capacity is limited by its own control method. Traditional attitude control strategies will be affected by factors such as sensor accuracy and lag, resulting in large control errors, so that it is difficult to achieve flight above 4g. The method for controlling the stealth high maneuvering target aircraft of the present invention confirms a dynamic model with high accuracy and high confidence using a system identification method, uses the combined control of overload and attitude to ensure stable flight control of large overload, and uses overload, speed, angle of attack, and sideslip angle by the control system, so that the stealth target aircraft can achieve overload of 8g, so as to simulate a high-speed high maneuvering target aircraft of the main flight characteristics of the third and fourth generation aircraft. The stealth target aircraft has the stealth characteristics of a small radar scattering area, meeting the needs of testing the combat capability of air combat weapon systems and the combat training of daily troops.

As a preferred solution of this embodiment, preferably, in step S1, the required state points of the flight envelope with high accuracy and high confidence are confirmed through a system identification method.

As a preferred solution of this embodiment, preferably, in step S3, the overload, speed, angle of attack, sideslip angle and height of the stealth high maneuvering target aircraft are simultaneously controlled to ensure the safety of overload and maneuvering flight.

The above are only specific embodiments of the present invention, but the protection scope of the present invention is not limited thereto. Any changes or replacements easily conceivable to those skilled in the art within the technical scope disclosed by the present invention should be covered by the protection scope of the present invention. Therefore, the protection scope of the present invention should be subject to the protection scope of the claims.

## Claims

1. A stealth high maneuvering target aircraft, comprising a fuselage (100), a wing (101), a vertical tail (102), a horizontal tail (103), and a "clam-type" air inlet (104) provided under the ventral of the fuselage (100), wherein:
the wing (101) is provided in the middle of the fuselage (100), the wing (101) is located on both sides of the fuselage (100) and is symmetrically provided, and the vertical tail (102) and the horizontal tail (103) are provided at the tail of the fuselage (100);
the sweep-back angle of the leading edge of the wing (101) ranges from 40° to 50°, the twisting angle of the leading edge ranges from 1° to 5°, the aspect ratio is set to be medium, the wing (101) is provided as a sweep-back lower single wing of a typical asymmetric and curved high-speed airfoil at the same time, and ailerons are provided at the rear edge in the middle of the left and right wings (101);
the horizontal tail (103) is provided in the form of having an elevator, and has an angle range of the sweep-back angle of the leading edge ranging from 40° to 50°, a medium aspect ratio, and a symmetric airfoil;
the vertical tail (102) is provided in the form of having no rudder, and has an angle range of the sweep-back angle of the leading edge ranging from 35° to 45°, a medium aspect ratio, and a symmetric airfoil.

2. The stealth high maneuvering target aircraft according to claim 1, wherein the sweep-back angle of the leading edge of the wing (101) is 45°, and the twisting angle of the leading edge of the wing (101) is 2°.

3. The stealth high maneuvering target aircraft according to claim 1, wherein the sweep-back angle of the leading edge of the horizontal tail (103) is 45°, and the sweep-back angle of the leading edge of the vertical tail (102) is 40°.

4. The stealth high maneuvering target aircraft according to claim 1, further comprising an air outlet, and the "clam-type" air inlet (104) and the air outlet are provided to be integrated.

5. The stealth high maneuvering target aircraft according to claim 1, wherein protrusions are provided on the fuselage (100), and the protrusions are all built into the fuselage (100).

6. The stealth high maneuvering target aircraft according to claim 1, wherein the surfaces of the fuselage (100) are all abutted using a serrated opening and/or seamlessly.

7. The stealth high maneuvering target aircraft according to claim 1, wherein the "clam-type" air inlet (104) is made of stealth material.

8. A method for controlling a stealth high maneuvering target aircraft according to any one of claims 1 to 7, comprising the steps of:
S1: confirming a dynamic model with high accuracy and high confidence through a system identification method;
S2: using the combined control of overload and attitude to ensure stable flight control of large overload;
S3: using overload, speed, angle of attack, and sideslip angle by the control system to ensure the safety of overload and maneuvering flight.

9. The method for controlling a stealth high maneuvering target aircraft according to claim 8, wherein in step S1, the required state points of the flight envelope with high accuracy and high confidence are confirmed through a system identification method.

10. The method for controlling a stealth high maneuvering target aircraft according to claim 8, wherein in step S3, the overload, speed, angle of attack, sideslip angle and height of the stealth high maneuvering target aircraft are simultaneously controlled to ensure the safety of overload and maneuvering flight.
